Europäisches Patentamt

European Patent Office

Office européen des brevets

(19)

(11) **EP 1 643 027 A1**

(12) **EUROPÄISCHE PATENTANMELDUNG**

(43) Veröffentlichungstag:
**05.04.2006 Patentblatt 2006/14**

(51) Int Cl.:
*D06F 37/20* (2006.01)    *G01P 15/00* (2006.01)
*D06F 39/00* (2006.01)    *D06F 39/12* (2006.01)
*A21B 3/00* (2006.01)    *F24C 7/08* (2006.01)
*A47B 91/02* (2006.01)

(21) Anmeldenummer: 05112335.4

(22) Anmeldetag: **07.08.2002**

(84) Benannte Vertragsstaaten:
**AT BE BG CH CY CZ DE DK EE ES FI FR GB GR
IE IT LI LU LV MC NL PT SE SI SK TR**

(30) Priorität: **10.08.2001 DE 10139388**

(62) Dokumentnummer(n) der früheren Anmeldung(en)
nach Art. 76 EPÜ:
**02754983.1 / 1 419 295**

(71) Anmelder: **BSH Bosch und Siemens Hausgeräte
GmbH
81739 München (DE)**

(72) Erfinder:
• **Lorenz, Tilmann
BSH Bosch u. Siemens Hausgeräte
Carl-Wery-Strasse 34
81739 München (DE)**
• **Reitmeier, Willibald
BSH Bosch u. Siemens
Carl-Wery-Strasse 34
81739 München (DE)**

Bemerkungen:
Diese Anmeldung ist am 16 - 12 - 2005 als
Teilanmeldung zu der unter INID-Kode 62 erwähnten
Anmeldung eingereicht worden.

(54) **Haushaltsgerät mit einem Beschleunigungssensor**

(57) Es wird ein Haushaltgerät (20) mit einem Beschleunigungssensor (14, 30, 31) geschaffen, der sowohl zur Nivellierung des Haushaltgeräts als auch zur Wägung eines in dem Haushaltgerät eingebrachten Gutes, beispielsweise eines Wäschepostens oder von Geschirr, dient und außerdem, insbesondere für ein Wäschebehandlungsgerät, zur Erkennung von Unwuchten dient. Der Sensor beruht darauf, dass ein von einer Wärmequelle, beispielsweise einem Heizstab (5), erzeugtes Temperaturprofil innerhalb eines abgeschlossenen, ein Gas enthaltenen Raumes (6) infolge der Beschleunigung einer Ortsveränderung erfährt, die über Temperatursensoren gemessen wird, die in einer ebenen Platte (4) angeordnet sind.

**EP 1 643 027 A1**

**Beschreibung**

Die Erfindung bezieht sich auf ein Haushaltgerät mit mindestens einem Sensor zur Messung eines Temperaturprofils einer in dem Sensor integrierten Heizvorrichtung, wobei das Temperaturprofil durch eine Beschleunigung veränderbar ist, und wobei das Temperaturprofil durch die Lage des Haushaltgeräts, bezogen auf die Richtung des Vektors der Erdbeschleunigung, veränderbar ist.

Solch ein Sensor ist aus dem Dokument Bugnacki M. et al.: ‚A micromachined thermal accelerometer for motion, inclination, and vibration measurement', Sensors, Helmers Publishing, US, Bd. 18, Nr. 6, Juni 2001, Seitzen 98-104, XP001020754 ISSN: 0746-9462 bereits bekannt. Des weiteren wird in diesem Dokument der Einsatz solch eines Sensors zur Bestimmung von Unwuchten bei Waschmaschinen vorgeschlagen.

Aus der EP 0 539 617 A1 ist bereits eine Anordnung zur Überwachung der Unwucht bei einer Waschmaschine bekannt. Bei dieser Waschmaschine ist ein mittels einer Drehzahlerfassungsvorrichtung, beispielsweise mittels eines Tachogenerators, in einer Regelvorrichtung überwachter Elektromotor, insbesondere ein Reihenschlussmotor, vorgesehen. Ein die Unwucht erfassender Unwuchtsensor ist als Mikroschalter ausgebildet, der in Reihe zu der Drehzahlerfassungsvorrichtung, beispielsweise den Tachogenerator, angeschlossen ist. Bei Erreichen einer unzulässigen Unwucht unterbricht der Unwuchtsensor die Verbindung zwischen der Drehzahlerfassungsvorrichtung und der Regelvorrichtung.

Es ist die Aufgabe der Erfindung, ein verbessertes Haushaltgerät zu schaffen.

Gelöst wird diese Aufgabe erfindungsgemäß durch die Merkmale des Anspruchs 1.

Der Sensor ist zur Messung eines Temperaturprofils einer in dem Sensor integrierten Heizvorrichtung ausgebildet, wobei das Temperaturprofil durch eine Beschleunigung veränderbar ist, und wobei das Temperaturprofil durch die Lage des Haushaltgeräts, bezogen auf die Richtung des Vektors der Erdbeschleunigung, veränderbar ist.

Dieser Sensor lässt sich einsetzen, um die Nivellierung jedes Haushaltsgerätes, insbesondere einer Waschmaschine, zu bestimmen. Im Falle einer Waschmaschine kann dabei der Sensor eine Doppelfunktion ausüben: Einmal dient er zur Bestimmung von Unwuchten oder der Masse eines Wäschepostens, und andererseits dient er zur Nivellierung der Waschmaschine. Dabei ist der Sensor nicht nur beim Aufstellen des Haushaltsgerätes nützlich, um dabei erstmals das Haushaltgerät so aufzustellen, dass es in beiden Richtungen in der Ebene waagerecht steht, sondern auch später, um zu überprüfen, ob das Haushaltgerät nach wie vor in beiden Richtungen waagerecht steht, oder ob es sich in einer oder in beiden Richtungen abgesenkt hat. Bei Überschreiten vorgegebener noch zulässiger Abweichungen, wird dabei ein Warnsignal erzeugt, damit der Bediener das Gerät entsprechend wieder neu nivelliert.

In einer weiteren vorteilhaften Ausbildung der Erfindung wird die Nivellierung durch das Hausgerät selber vorgenommen. Hierzu sind Stellmotoren, vorzugsweise im Bereich der Gerätefüße vorhanden, oder es ist ein pneumatisches oder hydraulisches Drucksystem vorgesehen, durch das ein Fluid derart verteilbar ist, dass das Gerät in beiden Richtungen waagerecht steht.

Wenn der Sensor oder eine Mehrzahl von Sensoren über eine Hebelkonstruktion, in einem Gerätefuß oder in einem Dämpfer untergebracht ist, lässt sich das Gewicht des Haushaltsgerätes oder der Zuladung, d.h. die Beladung bei einer Waschmaschine oder einem Wäschetrockner, ermitteln. Die Zuladung kann indirekt über die Auswertung der Beschleunigung des Sensors ermittelt werden. Beschleunigungssensoren sind beispielsweise bekannt durch die Firma Memsic. Der Ablauf der Messung geschieht dabei in folgender Weise: Zunächst wird die Wäschetrommel beladen, dann sinkt sie aufgrund der Beladung ab. Dies führt zu einer Beschleunigung an dem Sensorelement. Ferner wird die Zeit als zweite Größe gemessen. Daraus lässt sich der aufgrund der Beladung mit dem Wäschestück zurückgelegte Weg bestimmen. Aus der Kenntnis der Dämpfung des Haushaltgeräts lässt sich dann nach dem Hookeschen-Gesetz die Kraft bestimmen, die durch die Beladung mit dem Wäschestück hervorgerufen wurde, so dass auch die Unwuchtmasse bestimmt werden kann.

Gegebenenfalls kann die Drehzahl der Waschmaschine reduziert werden und durch Reversieren eine Neuausrichtung des Wäschepostens erreicht werden. Zur Motoransteuerung lassen sich auch Drehzahlrampen fahren. Ein besonderes Problem der Unwuchtmessung stellt die Ermittlung der sogenannten Taumelunwucht dar, d.h. der Unwucht entlang der Achse der Wäschetrommel und des Antriebsmotors. Erfindungsgemäß kann diese jedoch bei entsprechender Wahl und Ausrichtung des Sensorelements ermittelt werden. Bei gleichzeitiger Rückführung des Messsignals im Regelkreis der Maschine kann die Taumelunwucht kompensiert werden. Die Taumelunwucht lässt sich jedoch nur bei einer zweiachsigen Sensorik bestimmen

Wenn sich die Temperaturverteilung in einem Medium, das durch die Heizvorrichtung des Sensors erwärmt wird, infolge einer von einer Unwucht hervorgerufenen Beschleunigung ändert, lässt sich die dadurch geänderte Temperaturverteilung messen und auf die Stärke der Beschleunigung rückschließen. Auch die Richtung der Beschleunigung lässt sich bestimmen, wenn die Temperaturverteilung in zwei Achsen gemessen wird.

Besonders geeignet ist eine Ausführung der Waschmaschine, bei der der Sensor an dem Laugenbehälter angeordnet ist. Dadurch wird eine sehr direkte Bestimmung von Unwuchten ermöglicht, die beim Schleudern eines Wäschepostens in der Wäschetrommel auf den Laugenbehälter ausgeübt werden.

In einer anderen vorteilhaften Ausführungsform ist der Sensor in einem die Schwingungen des Laugenbehälters dämpfenden Dämpfer oder in einem Fuß der Waschmaschine angeordnet.

Vorteilhaft ist in einer anderen Ausführungsform, dass der Sensor sich unterhalb der oberen Außenfläche des Wäschebehandlungsgeräts befindet. Dadurch wird die Messfunktion des Sensors dem Bediener unmittelbar zugänglich gemacht. Vorteilhaft ist, wenn der von dem Sensor gemessene Wert auf einer Anzeigevorrichtung angezeigt wird.

Ebenso kann durch eine gesonderte Anzeigevorrichtung auch das Ergebnis einer von dem Sensor durchgeführten Messung für den Bediener angezeigt werden.

Der Sensor zur Bestimmung der Unwucht lässt sich auch dazu einsetzen, um im Ruhezustand der Waschmaschine den in die Wäschetrommel aufgefüllte Wäschemenge in ihrer Masse nachzubestimmen. Mittels des Sensors lässt sich in einer vorteilhaften Ausbildung der Waschmaschine auch eine Warnvorrichtung aktivieren, die ein Warnsignal bei Überladung der Waschmaschine ausgibt. Damit lässt sich auf eine gegenüber dem Stand der Technik neue Weise die Beladung bestimmen, die herkömmlich beispielsweise über eine induktive Wegmessung erfolgt. Entsprechend lässt sich auch die Beladung bzw. das Gewicht bzw. der Wasserstand in einer Waschmaschine oder in einem Geschirrspüler anzeigen.

Nachstehend wird die Erfindung in Ausführungsbeispielen anhand der Zeichnungen näher erläutert. Es zeigen:

Fig. 1a, b     einen erfindungsgemäßen Sensor im Querschnitt,

Fig. 2     eine mit dem Sensor gemäß Fig. 1a, b ausgestattete Anordnung zum Nivellieren eines Haushaltsgeräts,

Fig. 3     eine Anordnung zur Ermittlung der Unwucht einer Wäschetrommel sowie der Beladung und des Niveaus einer Waschmaschine,

Fig. 4     ein Ersatzschaltbild für die Messanordnung gemäß Fig. 3 und

Fig. 5     eine Backmuffel mit erfindungsgemäßen Sensoren.

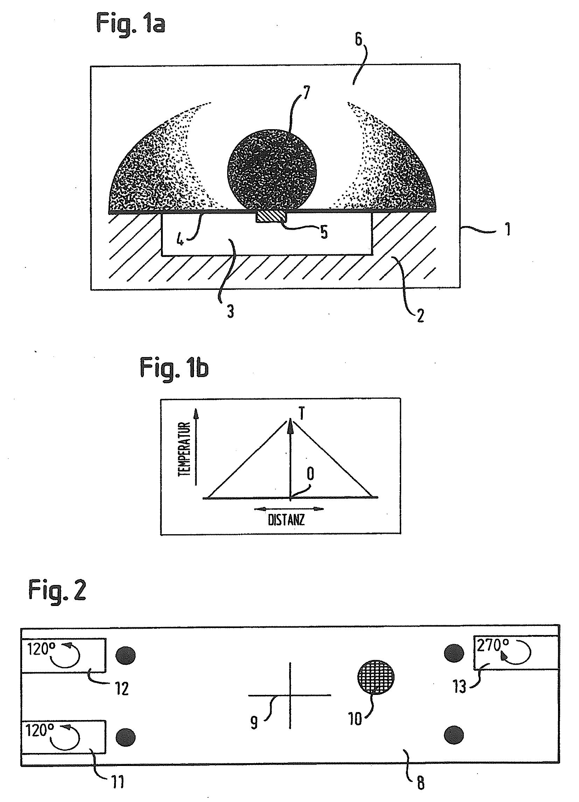

In einer von einer als Druckkapselung dienenden Wand 1 (Fig. 1a, b) umschlossenen Zelle ist auf einem Substrat 2, das vorzugsweise aus Silizium besteht, oberhalb einer kreisförmigen Kreisbohrung 3 eine kreisförmige Platte 4 angeordnet, die als Temperatursensor dient. Die Platte 4 ist in ihrem zentralen Bereich von einem Stab 5 durchbrochen, der sich erwärmt, so dass sich oberhalb des Stabs 5 in einem Raum 6 ein Wärmeprofil ausbildet, das eine mit zunehmender Entfernung von dem Stab 5 abnehmende Temperatur T aufweist. Oberhalb des Stabs 5 entsteht ein im wesentlichen kugel- oder kegelförmiges Gebiet 7 besonders stark erwärmten Gases. In Fig. 1b ist ausgehend von einem Mittelpunkt 0 die Temperatur T innerhalb des Raums 6 als Funktion des Abstandes von dem Stab 5 dargestellt. Die Temperatur T fällt dabei im wesentlichen proportional mit zunehmendem Abstand von dem Stab 5 ab.

Wenn nun eine Kraft auf den Sensor wirkt, werden die Gasmoleküle oder Gasatome in dem Raum 6 oberhalb des Stabs 5 gegenüber diesem und der Platte 4 beschleunigt, so dass sich die Lage des Wärmeprofils gegenüber der ursprünglichen Lage verändert. Da in der Platte 4 vorzugsweise pixelweise Sensoren zur Temperaturmessung integriert sind, lässt sich diese Lageveränderung messen als Temperaturänderung in einer der beiden durch die Ebene der Platte 4 aufgespannten Richtungen X und Y. Dabei lässt sich nicht nur die Lageveränderung des Profils selber messen, sondern auch dessen zeitliche Veränderung, indem die Sensoren innerhalb der Platte 4 feststellen, wann das Profil sich verändert hat.

Ebenso baut sich auch ein nicht vollkommen zu dem Stab 5 symmetrisches Wärmeprofil 7 auf, wenn der Stab 5 nicht völlig senkrecht angeordnet ist. Dies lässt sich dazu ausnutzen, um die Nivellierung eines Haushaltgerätes einzustellen. Dabei sind entweder mehrere Sensoren in der Art des in Fig. 1a dargestellten Sensors vorhanden, oder es ist nur ein einziger Sensor in einer der Ecken des Haushaltgerätes auf dessen oberer Oberfläche, d.h. der Arbeitsoberfläche, vorhanden.

Die Abweichung des Haushaltgeräts von der Horizontalen wird in einem Display 8 (Fig. 2) dargestellt, wobei ein Zentrierkreuz 9 anzeigt, wann die Lage des Haushaltgeräts völlig nivelliert ist. In diesem Fall muss eine veränderbare kreisrunde Anzeige 10 mit ihrem Mittelpunkt mit dem Mittelpunkt des Kreuzes 9 zur Deckung gelangt sein. Solange dies noch nicht der Fall ist, müssen, wie in Fig. 2 dargestellt, die Füße des Haushaltgeräts in ihrer Höhe verstellt werden, wozu der Bediener durch die Hinweise auf dem Display eine Anleitung erhält. Die Füße, die verstellt werden müssen, werden durch die Anzeigen 11, 12, 13 dargestellt. Dabei wird auch angezeigt, ob der Fuß hochgedreht werden muss, was bei den Anzeigen 11, 12 der Fall ist, gemäß den die Füße jeweils um 120° hoch gedreht werden müssen, oder ob der Fuß nach unten gedreht werden muss, was bei der Anzeige 13 der Fall ist, gemäß der der Fuß um 270° nach unten gedreht werden muss.

Auf diese Weise lässt sich jedes Hausgerät, insbesondere ein Wäschebehandlungsgerät wie eine Waschmaschine oder ein Wäschetrockner, nivellieren. Die Nivellierinformation kann auch durch die Gerätesteuerung ausgewertet werden. Bei der Erstaufstellung des Haushaltsgeräts an einem Ort kontrolliert der mindestens eine Sensor oder die Mehrzahl der sensoren die Nivellierung. Falls sie nicht stimmt ,wird automatisch mittels Stellmotoren oder mittels eines hydraulischen oder pneumatischen Systems die Höheneinstellung der Stellfüße verändert. Die Nivellierinformation wird entweder optisch angezeigt, wie durch das Display 8, oder sie wird akustisch mittels eines Lautsprechers an den Bediener weitergegeben. Vorzugsweise weist das Haushaltgerät auch eine Schnittstelle für den Anschluss des Haushaltgeräts an das Internet auf, oder es wird telefonisch dem Bediener einer Onlinehilfe für die Justierung gegeben.

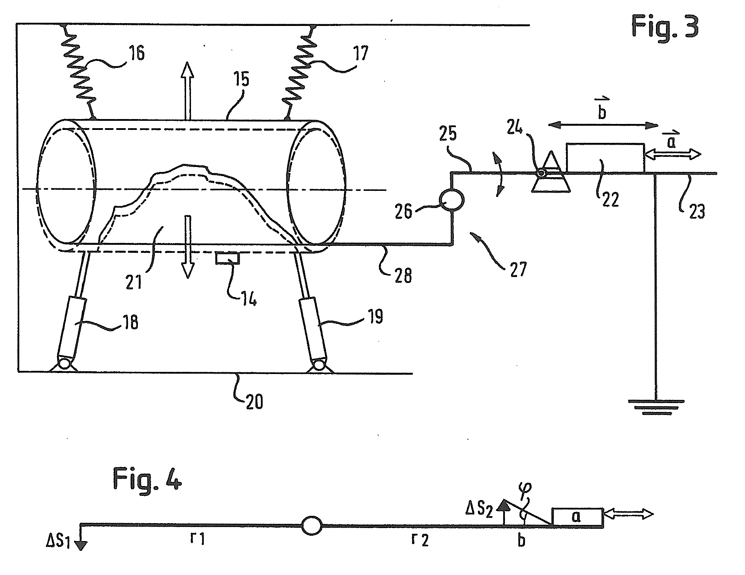

In einem anderen Ausführungsbeispiel (Fig. 3) ist ein Sensor 14 unterhalb eines (hier nur schematisch dargestellten) Laugenbehälters 15 angeordnet. Der Laugenbehälter 15 ist über Zugfedern 16, 17, sowie Dämpfer 18, 19 in einem (hier nicht maßstabsgetreu wiedergegebenen) Haushaltgerät 20 gelagert. Dabei wirkt ein Wäscheposten 21 mit seiner Gewichtskraft zusammen mit dem Gewicht des Laugenbehälters 15 auf die Dämpfer 18, 19 ein.

Anstelle der Anordnung des Sensors 14 unterhalb des Laugenbehälters 21 lässt sich auch ein Sensor 22 vorsehen, der auf einer Schiene 23 gelagert, die über ein Drehgelenk 24 mit einem Hebelarm 25 eines um einen Drehpunkt 26 drehbaren Hebels 27 verbunden ist. Der andere Hebelarm 28 des Hebels 27 ist mit dem Laugenbehälter 15 parallel zur Richtung der Drehachse des Laugenbehälters 15 verbunden. Über das Drehgelenk 24 wird eine Rotationsbewegung des Hebels 27 in eine Translationsbewegung in Richtung eines Weges b umgewandelt. Wenn der Laugenbehälter 15 in Folge einer Unwucht oder durch die Beladung mit Wäsche mit einer Kraft F, der Gewichtskraft, nach unten beschleunigt wird., wird diese Beschleunigung über den Hebel 27 in eine waagerechte Beschleunigung a entlang des Wegs b umgewandelt.

Aufgrund des Zusammenhangs zwischen dem Weg b und der Beschleunigung a:

$$b = \frac{1}{2} a \cdot t^2,$$

wobei t die Beschleunigungszeit bedeutet und wobei die Gewichtskraft

$$F = M \cdot g,$$

beträgt. Dabei bedeuten M das Gewicht der gesamten Beladung und g die Erdbeschleunigung. Für die Federkraft F, die der Laugenbehälter 15 innerhalb des Dämpfungssystems mit den Zugfedern 16, 17 und den Dämpfern 18, 19 ausübt, gilt:

$$F = D \cdot \Delta s_1,$$

wobei D die Federkonstante und $\Delta s_1$ der in senkrechter Richtung zurückgelegte Weg des Laugenbehälters 15 bedeuten. Für die Zentrifugalkraft $F_z$ gilt:

$$F_z = m \cdot \omega^2 \cdot r,$$

wobei $\omega$ die Winkelgeschwindigkeit bedeutet und m die Differenz aus Unwucht abzüglich des Gewichts bedeutet. Unter Berücksichtigung des Hebelwegs:

$$\frac{\Delta s_1}{r_1} = \frac{\Delta s_2}{r_2},$$

wobei $r_1$ und $r_2$ die Hebelwege und $\Delta s_1$ sowie $\Delta s_2$ die Wege für die Bewegung des Laugenbehälters 15 bzw. die Bewegung des Hebelarms 25 in senkrechter Richtung bedeuten, ergibt sich für die Masse der Wäsche:

$$M = \frac{D \cdot \tan\varphi \cdot a \cdot t^2 \cdot r_1}{2 \cdot g \cdot r_2}.$$

Dabei gilt für tan φ (vgl. Fig. 4):

$$\tan\varphi = \frac{\Delta s_2}{b}$$

Daraus folgt für die Unwucht m der Wäsche

$$m = \left( \frac{\dfrac{D \cdot \tan\varphi \cdot a \cdot t^2}{2} - M \cdot g}{\omega^2 r} \right)$$

Somit ist der Sensor 22 in der Lage, Beschleunigungswerte zu messen. Über die Beschleunigungswerte lässt sich dann sowohl die Masse der Wäsche als auch während des Betriebs eine Unwucht der Wäschetrommel bestimmen. Somit ist der Sensor 22 sowohl für statische als auch dynamische Messungen geeignet.

Wenn die Wand 1 des Sensors keine fest stehende Wand ist, sondern eine bewegliche Membran, lässt sich auch durch Aufbringen einer Kraft der Druck innerhalb des Sensors verändern. Die Druckänderung hat dann eine Temperaturänderung zur Folge, die von den in der Platte 4 integrierten Temperatursensoren detektiert wird. Daraus kann eine Kraft berechnet werden, aus der wiederum auf die Masse entweder des Wäschepostens oder auf eine Unwucht geschlossen werden kann. Mittels der Temperatursensoren kann man weiterhin auf Beschleunigungen in der Sensorebene und auf eine Winkeländerung schließen, wie bereits oben anhand der Nivellierung in Verbindung mit Fig. 2 dargestellt. Somit lassen sich mittels eines Sensors, wie er in Fig. 1a dargestellt ist, die Größen Wägung, Nivellierung und Unwuchterkennung ermitteln. Der Sensor ist entweder auf der Laugentrommel aufgebracht, so dass er zur Nivellierung und Unwuchterkennung dient, oder er ist auf der Rahmenkonstruktion des Hausgerätes angeordnet, so dass er neben der Wägung und Unwuchterkennung auch zur Nivellierung des Haushaltgerätes dienen kann. Auf diese Weise wird der Bediener bei der Justierung des Haushaltgerätes bei dessen erstmaligem Aufbau an einer Stelle unterstützt. Ebenso wird der Kunde auch unterstützt bei der Beladung des Haushaltgerätes, indem ihm, beispielsweise über ein Display oder akustisch eine Mitteilung über die bereits eingefüllte Wäsche gemacht wird. Bei Überladung wird ein Warnsignal erzeugt, so dass eine Beschädigung des Haushaltgeräts durch eine zu hohe Masse eines Wäschepostens vermieden wird. Auch eine Taumelunwucht, d.h. eine Unwucht entlang der Trommel-Motorachse der Waschmaschine oder des Wäschetrockners, lässt sich erfindungsgemäß erkennen, so dass Kompensationsmaßnahmen gegen die Taumelunwucht eingeleitet werden können. Dabei kann die Taumelunwucht mittels Drehzahlrampen durch eine entsprechend angepasste Motoransteuerung kompensiert werden. Wenn die Unwucht erkannt worden ist, führt ein Regelmechanismus zum Gegensteuern, beispielsweise zum Reversieren des Wäschepostens.

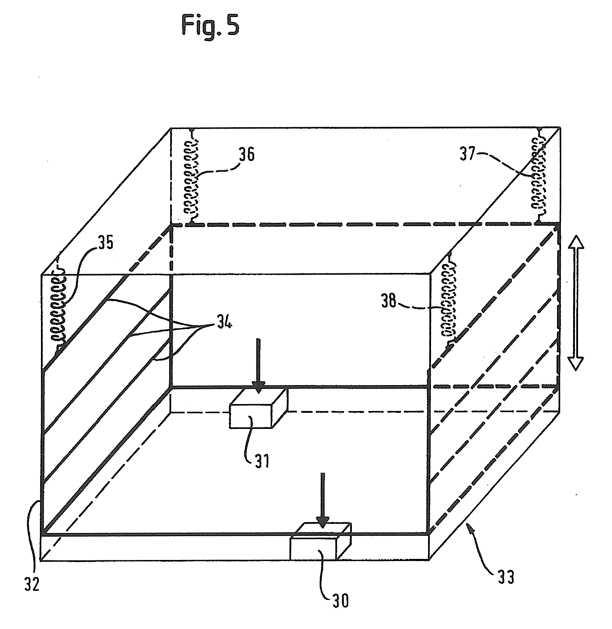

In einem weiteren Ausführungsbeispiel (Fig. 5) ist mindestens ein erfindungsgemäßer Beschleunigungssensor, ein Sensor 30, vorzugsweise ein zweiter Sensor 31, vorhanden, der unterhalb eines Blechführungsrahmens 32 einer Backmuffel 33 befestigt ist. Beide Sensoren 30, 31 beruhen, wie oben beschrieben, auf der Messung eines von einer jeweils in dem Sensor 30, 31 integrierten Heizvorrichtung erzeugten Temperaturprofils. Der Blechführungsrahmen 32 nimmt in Führungsleisten 34 Backbleche auf. Innerhalb eines Rahmens der Backmuffel 33 ist der Blechführungsrahmen 32 über Federn 35 bis 38 aufgehängt. Wenn nun die Backmuffel 33 beladen wird, werden die Federn 35 bis 38 ausgelenkt und somit der Blechführungsrahmen 32 abgesenkt. Dadurch werden die Sensoren 30, 31 in senkrechter Richtung beschleunigt. In einer alternativen Ausführungsform wird die senkrechte Bewegung des Blechführungsrahmens 32 in eine waagrechte Bewegung umgewandelt, um auf diese Weise die Sensoren in horizontaler Richtung zu beschleunigen. Auf diese Weise wird die Beladung der Backmuffel 33 mit einem Gargut gemessen.

Als besonderer Vorteil dieser Wägevorrichtung ist die weitgehende Temperaturunempfindlichkeit der Sensoren 30, 31 zu sehen. Für den Fall, dass, wie dargestellt, wenigstens zwei Sensoren 30, 31 vorhanden sind, die beispielsweise, in Schieberichtung der Backbleche betrachtet, einen gewissen örtlichen Versatz zu einander haben, lässt sich auch eine örtliche Auflösung der Gewichtsbelastung des Backblechs bestimmen. Dementsprechend kann dann die Luftführung bei Umluftbetrieb in der Backmuffel 33 oder die Temperaturführung in der Backmuffel 33 angepasst werden. Der Blechführungsrahmen ist leicht verkippbar, ohne dass er klemmt. Zum Reinigen lässt er sich entnehmen. Der Blechführungsrahmen 32 besteht entweder aus einem Drahtgestell oder aus einem flächigen Rahmen aus Email.

Es wird ein Beschleunigungssensor für ein Haushaltgerät 20 geschaffen, das sowohl zur Nivellierung des Haushaltgeräts als auch zur Wägung eines in dem Haushaltgerät eingebrachten Gutes, beispielsweise eines Wäschepostens oder von Geschirr, dient und außerdem, insbesondere für ein Wäschebehandlungsgerät, zur Erkennung von Unwuchten dient. Der Sensor beruht darauf, dass ein von einer Wärmequelle, beispielsweise einem Heizstab 5, erzeugtes Temperaturprofil innerhalb eines abgeschlossenen, ein Gas enthaltenen Raumes 6 infolge der Beschleunigung einer Ortsveränderung erfährt, die über Temperatursensoren gemessen wird, die in einer ebenen Platte 4 angeordnet sind.

**Patentansprüche**

1. Haushaltgerät (20) mit mindestens einem Sensor (14, 30, 31) zur Messung eines Temperaturprofils einer in dem Sensor (14, 30, 31) integrierten Heizvorrichtung, wobei das Temperaturprofil durch eine Beschleunigung veränderbar ist, und wobei das Temperaturprofil durch die Lage des Haushaltgeräts (20), bezogen auf die Richtung des Vektors der Erdbeschleunigung, veränderbar ist, **dadurch gekennzeichnet, dass** das Haushaltgerät (20) anhand des Sensorsignals nivellierbar ist.

2. Haushaltgerät (20) nach Anspruch 1, **dadurch gekennzeichnet, dass** vier jeweils den Ecken des Haushaltgeräts (20) zugeordnete Sensoren (14, 30, 31) vorhanden sind.

3. Haushaltgerät (20) nach Anspruch 1 oder 2, **dadurch gekennzeichnet, dass** mit dem Sensor (14, 30, 31) in Verbindung stehende optische oder akustische Anzeigemittel, entweder an dem Haushaltgerät (20) selbst oder über ein Netz entweder über Leitungen oder über Funk mit diesem verbunden, vorhanden sind, durch die ein Bediener Hinweise auf die Justierung des Haushaltgeräts (20) erhält.

**4.** Haushaltgerät (20) nach Anspruch 1 oder 2, **dadurch gekennzeichnet, dass** Stellmotoren zur Einstellung der Höhe des Hausgeräts aufgrund der von dem Sensor (14, 21, 22) ermittelten Daten vorhanden sind.

**5.** Haushaltgerät (20) nach Anspruch 1 oder 2, **dadurch gekennzeichnet, dass** ein pneumatisches oder hydraulisches Druckleitungssystem vorhanden ist, durch das aufgrund der von dem Sensor (14, 21, 22) ermittelten Daten die Höhe des Haushaltgeräts (20) einstellbar ist.

**6.** Haushaltgerät nach einem der vorhergehenden Ansprüche, **dadurch gekennzeichnet, dass** der Sensor (14, 21, 22) in einem Dämpfer (18, 19) oder in einem Gerätefuß des Haushaltgeräts (20) angeordnet ist.

**7.** Haushaltgerät nach einem der vorhergehenden Ansprüche, **dadurch gekennzeichnet, dass** eine Messeinrichtung vorhanden ist, in der aus dem von dem Sensor (14, 30, 31) gemessenen Signal die Masse eines in das Haushaltgerät (20) eingebrachten Gutes bestimmbar ist.

**8.** Haushaltgerät, insbesondere Backmuffel, nach einem der vorhergehenden Ansprüche, **dadurch gekennzeichnet, dass** das Temperaturprofil durch die Lage eines über Federn (35, 36, 37, 38) in senkrechter Richtung beweglichen Blechführungsrahmens (34) in dem Haushaltgerät veränderbar ist.

**9.** Waschmaschine nach einem der Ansprüche 1 bis 7, **dadurch gekennzeichnet, dass** der Sensor (14) an dem Laugenbehälter (15) angeordnet ist.

**10.** Waschmaschine nach Anspruch 9, **dadurch gekennzeichnet, dass** eine Anzeigevorrichtung (11, 12, 13) zur Anzeige der Masse der Wäsche vorhanden ist.

**11.** Waschmaschine nach Anspruch 9 oder 10, **dadurch gekennzeichnet, dass** eine Warnvorrichtung zur Ausgabe eines Warnsignals bei Überladung der Waschmaschine (20) vorhanden ist.

Fig. 1a

Fig. 1b

Fig. 2

Fig. 3

Fig. 4

EP 1 643 027 A1

Fig. 5

EP 1 643 027 A1

**Europäisches Patentamt**

**EUROPÄISCHER RECHERCHENBERICHT**

Nummer der Anmeldung

EP 05 11 2335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 39 02 908 A1 (LICENTIA PATENT-VERWALTUNGS-GMBH, 6000 FRANKFURT, DE) 2. August 1990 (1990-08-02) * das ganze Dokument * ----- | 1-11 | D06F37/20 G01P15/00 D06F39/00 D06F39/12 A21B3/00 F24C7/08 A47B91/02 |
| Y | DE 42 43 978 C (PLOECHINGER HEINZ DIPL ING FH) 5. Januar 1994 (1994-01-05) * das ganze Dokument * ----- | 1-11 | |
| Y | EP 0 294 014 A (CREDA LTD) 7. Dezember 1988 (1988-12-07) * das ganze Dokument * ----- | 2,6,7, 10,11 | |
| Y | GB 963 047 A (CONSTRUCTA-WERKE G.M.B.H) 8. Juli 1964 (1964-07-08) * Seite 2, Zeilen 21-53; Abbildungen * ----- | 5 | |
| Y | DE 200 16 793 U (RATIONAL AG) 21. Dezember 2000 (2000-12-21) * Zusammenfassung; Abbildungen * ----- | 8 | |
| Y | EP 1 087 052 A (ELECTROLUX ZANUSSI ELETTRODOME) 28. März 2001 (2001-03-28) * Zusammenfassung * * Spalte 3, Absätze 11,14 * * Spalte 4, Zeilen 8-12; Abbildungen * ----- | 9 | **RECHERCHIERTE SACHGEBIETE (IPC)** D06F A47L G01P A21B F24C A47B F16M |
| A | EP 0 972 874 A (SAMSUNG ELECTRONICS CO LTD) 19. Januar 2000 (2000-01-19) * das ganze Dokument * ----- | 6,7,10, 11 | |
| A | EP 0 984 092 A (MIELE & CIE) 8. März 2000 (2000-03-08) * das ganze Dokument * ----- | 7,9,11 | |

-/--

Der vorliegende Recherchenbericht wurde für alle Patentansprüche erstellt

| Recherchenort | Abschlußdatum der Recherche | Prüfer |
|---|---|---|
| München | 7. Februar 2006 | Falkentoft, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

10

**Europäisches**
**Patentamt**

**EUROPÄISCHER RECHERCHENBERICHT**

Nummer der Anmeldung

EP 05 11 2335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | BUGNACKI M ET AL:  "A MICROMACHINED THERMAL ACCELEROMETER FOR MOTION, INCLINATION, AND VIBRATION MEASUREMENT" SENSORS, HELMERS PUBLISHING, US, Bd. 18, Nr. 6, Juni 2001 (2001-06), Seiten 98-104, XP001020754 ISSN: 0746-9462 * Seite 98, Zeile 1 - Zeile 26 * * Seite 103, Spalte 1, Zeile 17 - Spalte 2, Zeile 6; Abbildungen 1-4 * ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. Februar 2006 | Falkentoft, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder  Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 11 2335

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 3902908 | A1 | 02-08-1990 | FR | 2642503 A1 | 03-08-1990 |
| | | | IT | 1238455 B | 18-08-1993 |
| DE 4243978 | C | 05-01-1994 | KEINE | | |
| EP 0294014 | A | 07-12-1988 | GB | 2202646 A | 28-09-1988 |
| GB 963047 | A | 08-07-1964 | LU | 41943 A1 | 27-08-1962 |
| DE 20016793 | U | 21-12-2000 | KEINE | | |
| EP 1087052 | A | 28-03-2001 | IT | PN990075 A1 | 23-03-2001 |
| EP 0972874 | A | 19-01-2000 | CN | 1242447 A | 26-01-2000 |
| | | | DE | 69807055 D1 | 12-09-2002 |
| | | | DE | 69807055 T2 | 24-04-2003 |
| | | | JP | 3068070 B2 | 24-07-2000 |
| | | | JP | 2000037589 A | 08-02-2000 |
| | | | TW | 415981 B | 21-12-2000 |
| | | | US | 6065170 A | 23-05-2000 |
| EP 0984092 | A | 08-03-2000 | AT | 238444 T | 15-05-2003 |
| | | | DE | 19839896 A1 | 09-03-2000 |
| | | | ES | 2195487 T3 | 01-12-2003 |

EPO FORM P0461

Für nähere Einzelheiten zu diesem Anhang : siehe Amtsblatt des Europäischen Patentamts, Nr.12/82